# EUROPEAN PATENT APPLICATION

(11) **EP 4 738 591 A1**
(43) Date of publication of application: **06.05.2026**
(21) Application number: 25772361.9
(22) Date of filing: 06.03.2025
(51) Int. Cl.: H01M 50/383, H01M 10/658, H01M 50/271, H01M 50/591, H01M 50/502, H01M 50/51, H01M 50/249

(54) **BATTERY PACK, PACK LID, AND VEHICLE INCLUDING SAME**

(30) Priority: 15.03.2024 KR 20240036806; 05.03.2025 KR 20250027855
(71) Applicant: LG Energy Solution, Ltd., Seoul 07335 (KR)
(72) Inventor: LEE, Gi Hwan, Daejeon 34122 (KR); CHO, Seung Jae, Daejeon 34122 (KR); LEE, Chungho, Daejeon 34122 (KR); KIM, Jongjin, Daejeon 34122 (KR)
(74) Representative: BCKIP Part mbB
(86) International application number: PCT/KR2025/002981
(87) International publication number: WO 2025/192922

(57) **Abstract**

A battery pack, a pack lid, and a vehicle including same are introduced, the battery pack comprising a pack case; a plurality of battery modules in the pack case facing each other; and a blocking portion protruding from one surface of the pack case toward an inner space of the pack case and formed at a point between the battery modules facing each other to block a propagation of a flame or gas between the battery modules facing each other.

## Description

### [TECHNICAL FIELD]

The present disclosure relates to a battery pack and a pack lid having an improved safety of a battery in an abnormal situation and a vehicle including the same.

### [BACKGROUND ART]

Recently, a technology for carbon reduction has been actively developed to solve environmental problems such as abnormal temperature. For carbon reduction, energy needs to be produced by a naturally friendly method rather than by producing energy by fossil fuels, the produced energy is stored in the form of electric energy, and the stored electric energy is used in vehicles or various industrial sites and homes.

In order to utilize electric energy for carbon reduction, it is essential to use batteries capable of storing and drawing electric energy. Therefore, in order to sufficiently store and use electric energy without inconvenience, it is essential to secure performance of the battery.

The battery mainly uses a redox reaction of metal ions, and metal ions are used at high density to increase capacity, charge and discharge performance, and efficiency of the battery, and many studies on materials or solid electrolytes constituting electrolytes have been conducted. However, generally, there is a problem that the stability deteriorates as the performance of the battery develops.

In the case of batteries used in vehicles, industries, homes, and the like, batteries are manufactured in a physical unit such as a pack. The battery pack has a function of preventing a fire from being transferred to the outside even when an accident such as a thermal runaway of the battery occurs, and protecting the internal battery cells such that the internal battery cells are not degraded due to an influence of an external environment or are damaged due to a physical reason.

The battery pack has a plurality of battery cells embedded in an intermediate form of a module or a cell module assembly(CMA). In the case of a battery module or assembly, a plurality of battery cells are assembled into one module or assembly, and a plurality of modules are fastened to the inside of a pack case, thereby completing the battery pack. When the battery is maintenance, the maintenance is performed in units of the module or assembly, thereby facilitating maintenance.

The plurality of unit battery cells constituting the module or assembly include a positive electrode, a negative electrode, and an electrolyte. Since heat is generated during charge and discharge, effective heat dissipation for battery cells is required. In addition, a design for efficient heat dissipation is necessary to prevent a safety accident even in terms of the battery module or assembly and the battery pack.

Meanwhile, the battery may be subjected to deteriorate due to error in manufacturing, excessive charge and discharge, and aging. In addition, when the battery is continuously deteriorated, a fire may eventually occur. Therefore, it is necessary to prepare the battery so as not to generate a fire in advance. To this end, it is important to continuously sense a state of the battery and recognize and respond in advance when a problem occurs, and it is necessary to minimize damage when an unexpected problem occurs.

The above-described background descriptions are merely for enhancing an understanding of the background of the present invention, and should not be taken as an admission that the background descriptions are known to those skilled in the art.

### [DETAILED DESCRIPTION OF INVENTION]

### [TECHNICAL PROBLEMS]

The present invention has been made in view of the above problems, and it is an object of the present invention to provide a battery pack, a pack lid, and a vehicle including the same, which can prevent a fire from propagating to a facing module when a fire occurs in a specific battery module and prevent flames from leaking outwards by preventing an electrical short, thereby improving safety.

The technical problems to be achieved by the present invention are not limited to the above-described technical problems, and other technical problems not described herein will be clearly understood by those skilled in the art from the following description.

### [TECHNICAL SOLUTION]

In accordance with another aspect of the present invention, there is provided a battery pack including: a pack case; a plurality of battery modules in the pack case facing each other; and a blocking portion protruding from one surface of the pack case toward an inner space of the pack case and formed at points between facing battery modules to block a propagation of a flame or gas between facing battery modules.

In the case of the battery pack according to the present disclosure, the blocking portion may protrude downward from the upper surface of the pack case or upward from the lower surface of the pack case.

In the case of the battery pack according to the present disclosure, a terminal or a busbar is provided in the battery module, and the blocking portion may protrude toward the battery module to cover the terminal or the busbar of the battery module.

In the case of the battery pack according to the present disclosure, the plurality of battery modules may be disposed to face in the width direction of the pack case, and the blocking portion may protrude to cover the facing end portions of the battery modules together.

In the case of the battery pack according to the present disclosure, the battery modules facing in the width direction of the pack case may constitute one layer, a plurality of layers may be arranged in the longitudinal direction of the pack case, and the blocking portion may extend in the longitudinal direction of the pack case to cover the battery modules included in the plurality of layers.

In the case of the battery pack according to the present disclosure, the pack case may include a case body having one side opened and a pack lid closing the case body, and the blocking portion may be formed such that a portion of the pack lid is recessed inside the pack case.

In the case of the battery pack according to the present disclosure, a barrier disposed between the battery modules facing each other is provided in the case body, and the blocking portion protrudes toward the end of the barrier, thereby blocking the propagation of flame or gas at the end of the barrier.

In the case of the battery pack according to the present disclosure, a terminal or a busbar may be provided at end portions of the battery modules facing each other, and the blocking portion may cover the terminal or the busbar of the battery modules facing each other.

In the case of the battery pack according to the present disclosure, a terminal or a busbar is provided at end portions of the battery modules facing each other, the terminal or the busbar is protected by a busbar cover formed of a fire resistant material, and the blocking portion may cover the busbar cover of the battery modules facing each other.

In the case of the battery pack according to the present disclosure, the blocking portion may be brought into contact with the busbar covers of the battery modules facing each other, thereby blocking flame or gas propagation between the busbar covers facing each other.

In the case of the battery pack according to the present disclosure, protrusions spaced apart from each other are formed in the blocking portion, and the busbar cover may be seated between the protrusions, so that the blocking portion and the busbar cover may be in contact with each other.

In the case of the battery pack according to the present disclosure, the blocking portion may include a contact portion having a planar shape and surface contact with the busbar cover and a connection portion extending inclinedly from both ends of the contact portion to a side opposite to the busbar cover and supporting the contact portion.

In the case of the battery pack according to the present disclosure, the battery modules may be arranged in a matrix shape having a plurality of rows and columns, and a barrier may be provided between adjacent battery module columns, and the blocking portion may cover the end portions of the battery modules facing each other and the barrier together.

In the case of the battery pack according to the present disclosure, the end portions of the battery modules included in the same column are connected in series through a first busbar, the last battery modules included in the adjacent column face each other are connected in series through a second busbar, and the blocking portion may cover the end portions of the battery modules facing each other, the barrier, the first busbar, and the second busbar.

In the case of the battery pack according to the present disclosure, the blocking portion may be made of the same material as the pack case and may be molded together when the pack case is molded.

The pack lid according to the present disclosure closes a case body having one surface opened thereto, and a blocking portion protruding toward an inner space of the case body from points between the battery modules disposed to face each other is disposed in the pack lid to block a propagation of a flame or gas between the battery modules facing each other.

In the case of the vehicle according to the present disclosure, the vehicle includes the above battery pack.

### [EFFECT OF INVENTION]

According to a battery pack, a pack lid and a vehicle including the same in the present disclosure, when a fire is generated in a specific battery module, a fire may be prevented from being transmitted to a facing module and a fire may be prevented from being leaked to the outside by preventing an electrical short, thereby improving the safety of the battery system and the overall safety of the higher system using the battery system.

The effects that can be obtained by the present invention are not limited to the above-described effects, and other effects that are not described may be clearly understood by those skilled in the art from the following description.

### [BRIEF DESCRIPTION OF THE DRAWING]

FIG. 1 is a perspective view of a battery pack according to an embodiment of the present invention.
FIG. 2 is a cross-sectional view taken along line A-A of the battery pack illustrated in FIG. 1.
FIG. 3 is a perspective view of a battery module according to an embodiment of the present invention.
FIG. 4 is an exploded perspective view of a battery module according to an embodiment of the present invention.
FIG. 5 is a perspective view of a battery cell according to an embodiment of the present invention.
FIG. 6 is a partial enlarged view of the battery pack illustrated in FIG. 2.
FIG. 7 is a view illustrating a structure of a battery pack according to an embodiment of the present invention.
FIG. 8 is a partial enlarged view of the battery pack illustrated in FIG. 7.
FIG. 9 is a cross-sectional view of a battery pack according to another embodiment of the present invention.

### [BEST MODE FOR CARRYING OUT THE INVENTION]

In describing the embodiments disclosed herein, a detailed description of related known techniques will be omitted when it is judged that the subject matter of the embodiments disclosed herein may be obscure. In addition, the accompanying drawings are merely provided to allow easy understanding of the embodiments disclosed herein, and it should be understood that the technical spirit disclosed herein is not limited by the accompanying drawings, and all changes, equivalents, and substitutes included in the spirit and technical scope of the present invention are included.

Terms including ordinal numbers such as first and second may be used to describe various elements, but the elements are not limited by the terms. The terms are used only for the purpose of distinguishing one element from another.

The singular forms include plural forms unless the context clearly dictates otherwise.

It should be understood that the terms "include" or "have" used herein specify the presence of stated features, numbers, steps, operations, elements, components, or combinations thereof, but do not preclude the presence or addition of one or more other features, numbers, steps, operations, elements, components, or combinations thereof.

The suffix "module" and "unit" for components used in the following description are given or mixed only in consideration of ease of writing the specification, and do not have a distinctive meaning or role from each other.

It will be understood that when an element is referred to as being "connected to" or "coupled to" another element, it may be directly connected to or coupled to the other element or intervening elements may be present. On the other hand, when an element is referred to as being "directly connected" or "directly connected" to another element, it should be understood that there are no intervening elements.

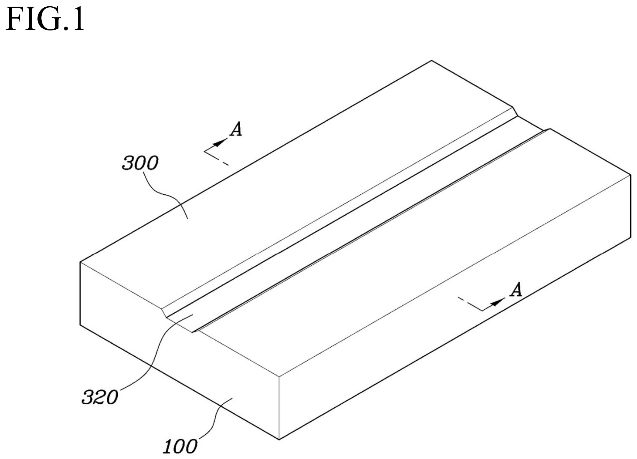

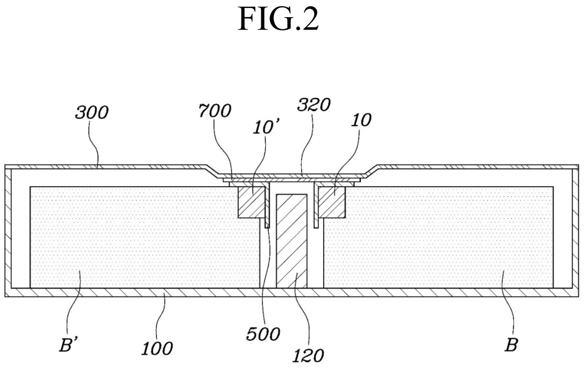

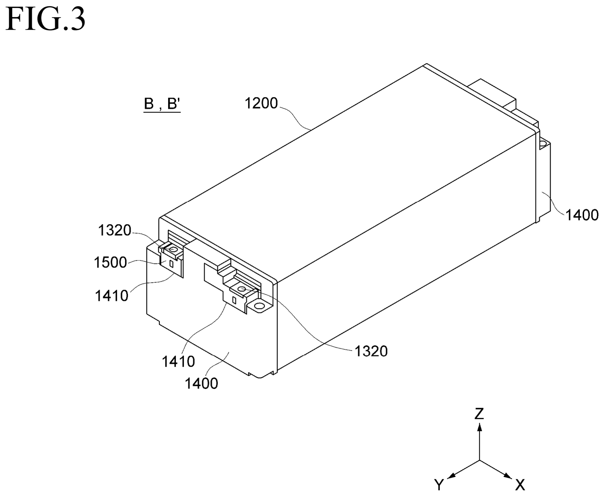

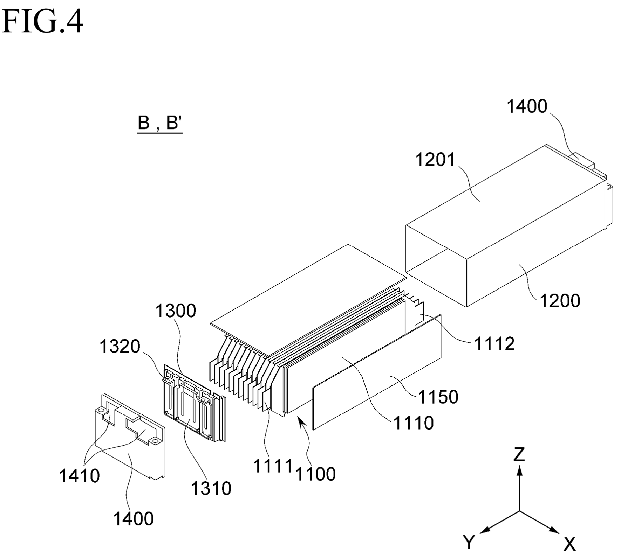

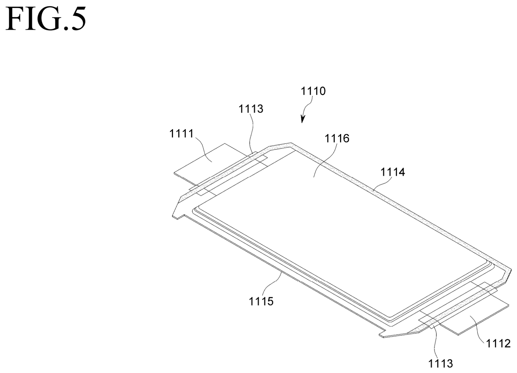

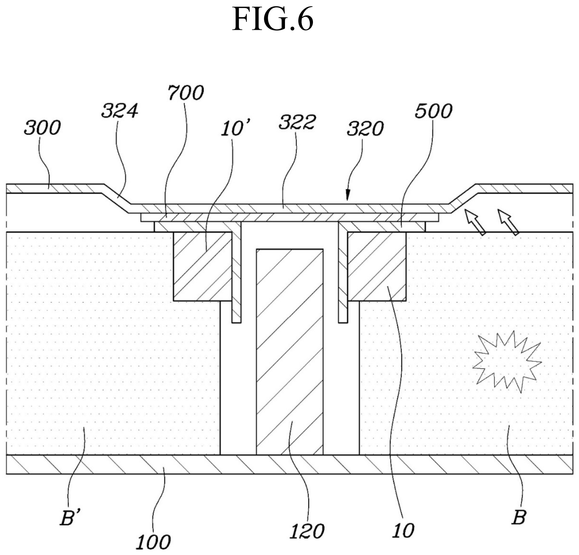

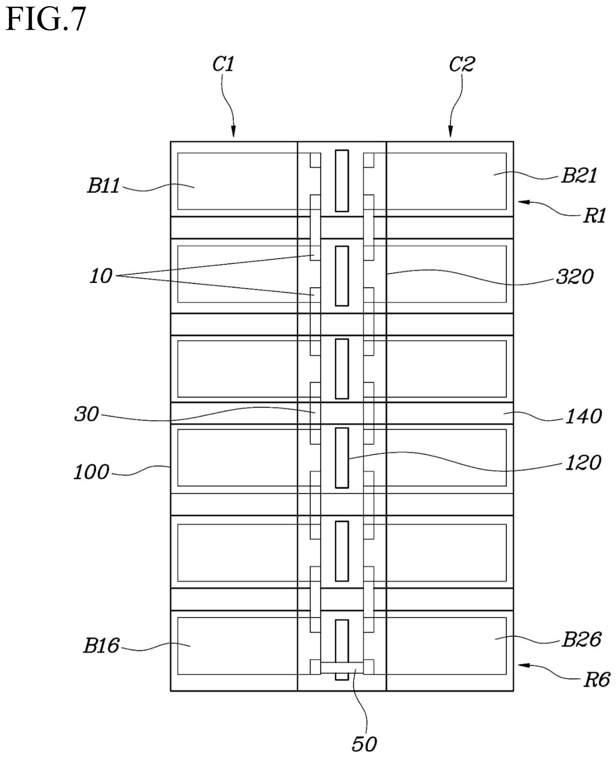

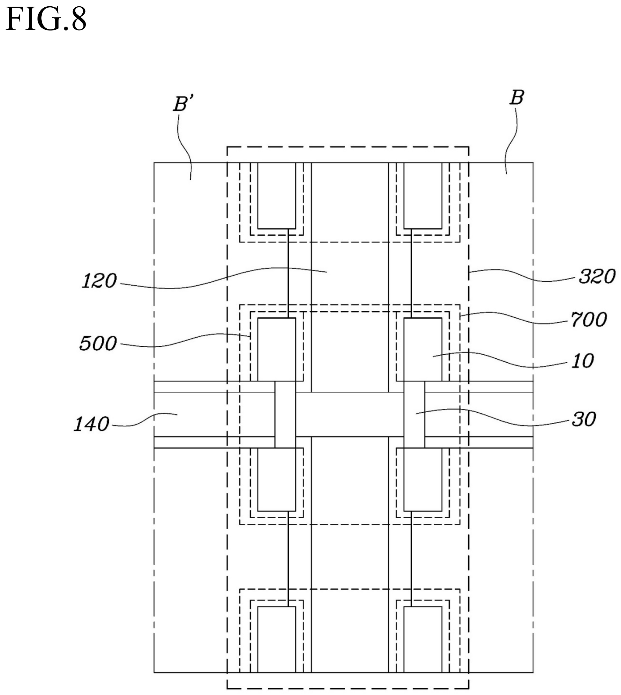

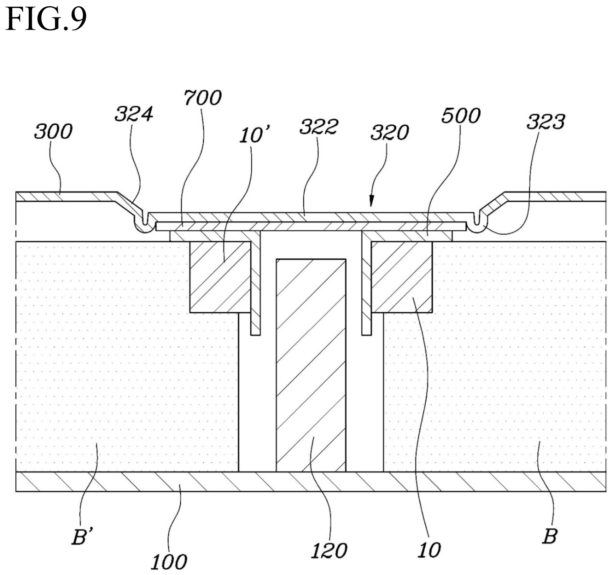

FIG 1 is a perspective view of a battery pack according to an embodiment of the present invention, FIG 2 is a cross-sectional view taken along line a-a of the battery pack illustrated in FIG 1, FIG 3 is a perspective view of a battery module according to an embodiment of the present invention, FIG 4 is an exploded perspective view of the battery module according to an embodiment of the present invention, FIG 5 is a perspective view of a battery cell according to an embodiment of the present invention, FIG 6 is a part enlarged view of the battery pack illustrated in FIG 2, FIG 7 is a view showing a structure of the battery pack according to an embodiment of the present invention, FIG 8 is a part enlarged view of the battery pack illustrated in FIG 7, and FIG 9 is a cross-sectional view of the battery pack according to another embodiment of the present invention. Hereinafter, embodiments disclosed herein will be described in detail with reference to the accompanying drawings, and the same or similar elements will be denoted by the same reference numerals regardless of the reference numerals, and repetitive descriptions thereof will be omitted.

A battery pack of the present invention will be described with reference to FIGS 1, 2 and 7. The battery pack of the present invention is configured by mounting a plurality of battery modules inside a pack case. The pack case has a shape of a housing having an inner space. The pack case is formed of a material having a relatively high rigidity because the battery module B needs to be protected therein. In particular, in the case of a battery mounted on a vehicle, performance against collision should be secured, and if a fire occurs inside, propagation to the outside should be prevented, so the pack case may be formed of a metal material. Also, among metals, since the moldability should be secured and the weight should be light, it can be molded with aluminum. Of course, the pack case of the present invention is not limited to the material or shape presented above.

The pack case may include a case body 100 and a pack lid 300 for assemblability. The case body 100 may have an open top surface, a open bottom surface, or a open side surface in some cases, and the pack lid 300 functions to close the open surface of the case body 100. In the illustrated embodiment, the case body 100 is formed of a bottom surface and a side surface to form an internal space, and a plurality of battery modules B are mounted in the internal space, and the case body 100 has an open top surface and battery modules B can be mounted therein through the open top surface of the case body 100. The opened upper surface of the case body 100 is covered through the pack lid 300. In addition, the blocking portion 320 may be formed in the pack lid 300.

In another embodiment, when the lower surface of the case body is open, the roof surface and the side surface may be formed on the case body, and the battery modules may be mounted on the case body having the open lower surface, and then the lower surface may be closed by fastening the pack lid to the case body. In this case, the blocking portion may be formed on the pack lid.

Here, when the case body 100 having an open top surface is used, the bottom surface and the side surface may be extruded and then fabricated by welding to each other, and in the case of the pack lid 300, the blocking portion 320 may be fabricated together through a sheet press and then fastened to the case body 100 with a sealing therebetween. This is the same in the case of a case body having an open bottom surface and a pack lid.

Meanwhile, in the case body 100, since the case body 100 should withstand collisions or external impacts at the lower part, it can be manufactured to be relatively thick through aluminum extrusion, and in the case of extruded material, it is possible to secure both light weight and rigidity by taking a hollow structure.

In the case of the pack lid 300, since the pack lid 300 is fastened to the floor of the vehicle, it is possible to obtain the aid of the floor in terms of rigidity, so that it does not require as much rigidity as the case body 100, but may be formed by pressing a relatively thin sheet material, not extrusion, for molding, light weight, and assembly. Therefore, the pack lid 300 is somewhat free to realize a complicated shape, unlike the case body 100, and the present invention is to realize the blocking portion 320 through the shape design of the pack lid 300 to prevent a transition of fire or the like. The pack lid 300 and the case body 100 may be coupled in various ways, such as bonding, welding, and mechanical fastening.

In the case of a battery pack, a plurality of battery modules B are mounted adjacent to each other to face each other. Accordingly, when thermal runaway occurs in some modules inside the battery pack, flame or gas emitted from the corresponding module may propagate to adjacent other modules in the battery pack. Arcing occurs due to a flame or gas attack between adjacent battery modules, and thus the insulation between the battery modules B is destroyed. Therefore, the terminals 10 and the busbars 30 and 50 electrically connecting the battery modules B must be basically insulated and protected by flame, and physically separated from other battery modules B in which thermal runaway occurs, thereby fundamentally eliminating the possibility of flame propagation or shorting.

Meanwhile, when thermal runaway occurs in a specific battery cell or module, it is necessary to quickly release the gas from the specific battery cell or module to the outside. In the case of such a gas, it is possible to vent to the outside through the upper or lower portion of the battery pack. However, if there is a space connected between battery modules adjacent to each other at the upper or lower portion of the battery pack, a flame may be transferred or a short may occur between the battery modules. Therefore, in the case of the present invention, there is no space between the adjacent battery modules and the battery modules may be physically and completely isolated. The present invention provides a method for easily implementing physical separation only by molding a pack case or a pack lid 300 without requiring a separate complex shape or components to be manufactured and combined.

Referring to FIGS 1 and 2, the case body 100 includes an inner space, and a plurality of battery modules B and B' are arranged in a matrix form as shown in FIGS 7 and 8. In addition, a plurality of cross members 140 are formed in the case body 100 in the width direction, and a plurality of barriers 120 are formed in the length direction. The battery modules B and B' are arranged in the width direction so as to face each other with respect to the barrier 120 as shown in FIG 2. Of course, such an arrangement is merely one embodiment according to the present invention, and it is possible to arrange the battery modules B and B' to face each other in various ways unlike the illustrated embodiment.

As shown in FIGS 3 to 5, the battery modules B and B' may include a battery cell stack 1100 in which a plurality of battery cells 1110 are stacked along one direction, a module case 1200 accommodating the battery cell stack 1100, a busbar frame 1300 positioned on a front surface and/or a rear surface of the battery cell stack 1100, an end plate 1400 covering the front surface and/or the rear surface of the battery cell stack 1100, and busbars 1310 and 1320 mounted on the busbar frame 1300.

The battery cell stack 1100 may be formed by stacking the plurality of battery cells 1110 in one direction, and the plurality of battery cells 1110 may be electrically connected. The direction in which the plurality of battery cells 1110 is stacked may be the X-axis direction (or - X-axis direction) in FIG. 4.

The direction from the front to the rear of the battery cell stack 1100 or the opposite direction may be defined as the longitudinal direction of the battery cell stack 1100 and may be the Y-axis direction in the figure. In addition, the direction from the upper surface to the lower surface of the battery cell stack 1100 or the opposite direction may be defined as the width direction of the battery cell stack 1100 and may be the Z-axis direction in the figure.

The longitudinal direction of the battery cell stack 1100 may be substantially the same as the longitudinal direction of the battery cells 1110. Electrode leads 1111 and 1112 of the battery cells 1110 may be positioned on the front and rear sides of the battery cell stack 1100, and busbars 1310 and 1320 of the battery module 1000 may be positioned close to the front and rear sides of the battery cell stack 1100 to easily form electrical connections with the electrode leads 1111 and 1112.

The battery cell 1110 may be provided as a pouch-type battery cell, and the number of battery cells stacked per unit area may be maximized in the case of the pouch-type battery cell. However, the battery cell 1110 does not necessarily have to be provided in a pouch type, and may be provided in a square, cylindrical, or other various shapes.

The battery cell 1110 provided in a pouch type may include an electrode assembly and a cell case 1115 that accommodates the electrode assembly (refer to FIG. 5).

The cell case 1115 of the battery cell 1110 may be a pouch-type cell case 115 for accommodating the electrode assembly. The cell case 1115 includes a lower case and an upper case that covers the lower case, and the upper and lower cases may be formed as one piece. In addition, as illustrated in FIG. 5, connecting portions of the upper and lower cases may be formed in a structure in which they are bent and folded. In addition, as illustrated, the upper case may completely cover the lower case, and a sealing portion 1114 may be formed at the edge.

The upper and lower cases may both be formed in a laminate structure including an inner covering layer, a metal layer, and an outer covering layer. The inner covering layer is located on the inside of the cell case 1115 based on the metal layer, and the inner covering layer needs to have insulation and electrolytic resistance since it is in direct contact with the electrode assembly, and in order to achieve sealing, a sealing area where the inner layers are thermally bonded is required to have excellent thermal bonding strength. The metal layer is located between the inner covering layer and the outer covering layer and corresponds to a barrier layer that prevents moisture or various gases from penetrating into the battery from the outside, and a preferable material for the metal layer in contact with the inner covering layer may be an aluminum (Al) thin film that is lightweight and has excellent formability. The outer covering layer is located on the outside of the cell case 1115 based on the metal layer, and the outer covering layer can use a heat-resistant polymer that has excellent tensile strength, moisture permeability, and air permeability to protect the electrode assembly while ensuring heat resistance and chemical resistance, and for example, nylon or polyethylene terephthalate may be used for the outer covering layer.

A receiving groove 1116 may be formed in the upper and lower cases, and the electrode assembly may be received in the receiving groove 1116 of the upper and lower cases.

The electrode assembly accommodated in the cell case 1115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 1111 and 1112 respectively connected to the two electrode tabs by welding.

One of the two electrode leads 1111 and 1112 may be a positive lead connected to the positive tab, and the other may be a negative lead connected to the negative tab.

A lead film 1113 may be attached to each of the electrode leads 1111 and 1112. The lead film 1113 coupled to the electrode leads 1111 and 1112 is positioned between the electrode leads 1111 and 1112 and the cell case 1115 to prevent a short circuit from occurring between the electrode leads 1111 and 1112 and the cell case 1115 and to improve sealing power, thereby preventing leakage of the electrolyte, and the like.

The two electrode leads 1111 and 1112 are illustrated as being respectively positioned on both sides of the electrode assembly, but may be positioned on only one side of the electrode assembly depending on the arrangement of the electrode tabs.

The module case 200 may be for protecting the battery cell stack 1100 and electrical components connected thereto from external physical impact, and the module case 1200 may accommodate the battery cell stack 1100 and the electrical components connected thereto in the internal space thereof.

The module case 1200 may have various structures, and for example, the module case 1200 may have a mono-frame structure. Here, a mono-frame may be in the form of a metal plate in which the upper surface, the lower surface, and both side surfaces are integrated. The mono-frame may be manufactured by extrusion molding. As another example, the module case 1200 may have a structure in which a U-shaped frame and an upper plate (upper surface 1201) are combined. In the case of a structure in which a U-shaped frame and an upper plate are combined, the structure of the module case 1200 may be formed by combining the upper plate on the upper side of the U-shaped frame, which is a metal plate in which the lower side and both sides are combined or integrated, and each frame or plate may be manufactured by press molding. In addition, the module case 1200 may have an L-shaped frame structure in addition to a mono-frame or a U-shaped frame, and may be provided as in various structures not described in the above-described examples.

The structure of the module case 1200 may be provided in an open form in the longitudinal direction of the battery cell stack 1100. The front and rear sides of the battery cell stack 1100 may not be covered by the module case 1200. The electrode leads 1111 and 1112 of the battery cells 1110 may not be covered by the module case 1200. The front and rear of the battery cell stack 1100 may be covered by the busbar frame 1300, the end plate 1400, or the busbars 1310 and 1320 which will be described later, and accordingly, the front and rear of the battery cell stack 1100 can be protected from external physical impacts and the like.

A compression pad 1150 may be positioned between the battery cell stack 1100 and one side of the inner surface of the module case 1200.

The compression pad 1150 may be disposed to face the battery cell 1110 positioned at the outermost side of the battery cell stack 1100 in the X-axis direction in the figure.

Further, although not shown, a thermally conductive resin may be injected between the battery cell stack 1100 and the inner surface of the module case 1200, and a thermally conductive resin layer (not shown) may be formed between the battery cell stack 1100 and one side of the inner surface of the module case 1200 by the injected thermally conductive resin. Here, the thermally conductive resin layer may be positioned on the Z-axis of the battery cell stack 1100, and the thermally conductive resin layer may be formed between the battery cell stack 1100 and the bottom surface positioned on the -Z-axis of the module case 1200.

The busbar frame 1300 may be positioned on one side of the battery cell stack 1100 and may cover one side of the battery cell stack 1100 while guiding connection between the battery cell stack 1100 and an external device. Specifically, the busbar frame 1300 may be positioned on the front or rear of the battery cell stack 1100 as illustrated. At least one of the busbars 1310 and 1320 and a module connector may be mounted on the busbar frame 1300. As illustrated in FIG. 4, one side of the busbar frame 1300 may be connected to one side or the other side of the battery cell stack 1100, and the other side of the busbar frame 1300 may be connected to the busbars 1310 and 1320.

The busbar frame 1300 may include an insulating material. The busbar frame 1300 may restrict the busbars 1310 and 1320 from contacting other portions of the battery cells 1110 other than the portion where the busbars are connected to the electrode leads 1111 and 1112, and may prevent an electrical short circuit from occurring.

The busbar frame 1300 may be positioned on one side and the other side of the battery cell stack 1100.

The busbars 1310 and 1320 may be mounted on one side of the busbar frame 1300, and the busbars 1310 and 1320 may be for electrically connecting the battery cell stack 1100 or the battery cells 1110 and an external device circuit. A plurality of busbars 1310 and 1320 may be disposed and may be positioned between the battery cell stack 1100 or the busbar frame 1300 and the end plate 1400, thereby protecting the battery cell stack 1100 or the busbar frame 1300 from external impacts and minimizing deterioration of durability due to external moisture and the like.

The busbars 1310 and 1320 may be electrically connected to the battery cell stack 1100 through the electrode leads 1111 and 1112 of the battery cells 1110.

Specifically, the electrode leads 1111 and 1112 of the battery cells 1110 may be bent after passing through a lead slit formed in the busbar frame 1300 and connected to the busbars 1310 and 1320. The battery cells 1110 constituting the battery cell stack 1100 may be connected in series or in parallel by the bus bars 1310 and 1320.

The busbars 1310 and 1320 may include a terminal busbar 1320 for electrically connecting one battery module B, B' to another battery module B, B'. At least a part of the terminal busbar 1320 may be exposed to the outside of the end plate 1400 to be connected to another battery module B, B', and the end plate 1400 may include a terminal opening 1410 for this purpose.

Unlike the other bus bar 1310, the terminal bus bar 1320 may further include a protrusion protruding upward, and the protrusion may be exposed to the outside of the battery modules B and B' through the terminal opening 1410. The terminal busbar 1320 may be connected to another battery module (B, B') or a battery disconnect unit (BDU) by a protrusion exposed through the terminal opening 1410, and may form a high voltage (HV) connection thereto.

The end plate 1400 may be intended to protect the battery cell stack 1100 and the electrical components connected thereto from external physical impact by covering the open surface of the module case 1200. To this end, the end plate 1400 may be manufactured from a material having a predetermined strength, and for example, the end plate 1400 may include a metal such as aluminum or a plastic material.

The end plate 1400 may be combined with the module case 1200 while covering the busbar frame 1300 or the busbars 1310 and 1320 located on one side of the battery cell stack 1100. Each corner of the end plate 1400 may be combined with the corresponding corner of the module case 1200 by welding, or the like.

In addition, an insulating cover 1500 for electrical insulation may be positioned between the end plate 1400 and the bus bar frame 1300. The insulating cover 1500 may include an electrically insulating material and may block the busbars 1310 and 1320 from contacting the end plate 1400. The insulating cover 1500 may be positioned on the inner surface of the end plate 1400 and may be closely attached to the inner surface of the end plate 1400, but is not necessarily the case. The end plate 1400 may be positioned on one surface and the other surface of the module case 1200 to cover both surfaces of the battery cell stack 1100.

In the facing arrangement state, when thermal runaway occurs in the battery module B at any one side as shown in FIG 6, the corresponding module may discharge gas and flame upward, and when gas or flame passes beyond the barrier 120 to the adjacent battery module B', the fire may rapidly propagate. In addition, a short circuit between the battery modules B and B' may occur due to arcing between the terminals 10 and 10' of the battery modules (which correspond to the terminal busbars 1320) or the busbars 30 and 50 (which correspond to the inter-busbars connecting the terminal bus bars 1320), and thus the insulation may be destroyed, and a fire may occur in the entire battery pack or an external propagation of a flame due to the collapse of the pack lid 300 in the corresponding portion.

Therefore, in the case of the present disclosure, as shown in the figure, the shape of the blocking portion 320 recessed downward from the pack lid 300 is formed so that the blocking portion 320 physically and perfectly separates the points where the terminals 10 or the busbars 1320 of the two battery modules B and B' are located together with the barrier 120 between the battery modules B and B' facing each other. Through this, even if thermal runaway occurs in the battery module B at any one side, it is possible to block the transition of fire and prevent the insulation breakdown inside the battery pack, thereby preventing the damage of the pack lid 300.

Specifically, the battery pack according to the present disclosure includes a pack case; a plurality of battery modules B embedded in the pack case and disposed to face each other; and a blocking portion 320 protruding from an upper surface or a lower surface of the pack case toward an inner space of the pack case, and protruding from points between the facing battery modules B and B' to block a propagation of a flame or gas between the facing battery modules.

In the case of a pack case, as described above, a combination of the case body 100 having an open top surface and the pack lid 300 or a combination of the case body having an open bottom surface and the pack lid may be possible. In the illustrated embodiment, the pack case has an internal space and a plurality of battery modules are embedded. The battery module B may be positioned to the pack case in various ways such as welding, bolting, bonding, and hooking.

The battery module B is arranged in a matrix form. Accordingly, the battery module B may be disposed to face each other in the width direction. As shown in FIG 6, when thermal runaway occurs in the battery module B on the right side, gas or flame may be vented upward, and thus gas or flame may propagate from the battery module B' on the left side.

Since the battery modules embedded in the pack case are connected in series as shown in FIG 7, the left and right battery modules B and B' should be electrically insulated from each other. However, due to the thermal runaway of the battery module, the insulation between the battery modules facing each other may be destroyed according to the arcing phenomenon, and in this case, sparks or the like may strongly occur in the corresponding portion, and the pack lid 300 may be damaged.

When the pack lid 300 is damaged, a flame may be ejected to the outside and may lead to a fire of a vehicle. Therefore, in the case of the present invention, it is possible to be implemented by forming a blocking portion 320 at the points between the battery modules facing each other, and forming the blocking portion 320 so as to protrude the corresponding portion from the pack lid 300 into the pack. In this case, it is not necessary to assemble other separate components, and since the blocking portion 320 is easily implemented only by the shape of the pack lid 300, it is easy to implement, and there is no problem of tolerance due to assembly, and the blocking portion 320 may sufficiently press the battery modules through the shape of the blocking portion 320.

FIG. 7 shows a structure in which battery modules are arranged in the battery pack of the present invention. In the pack case, a plurality of battery modules B are arranged in the form of a matrix. Specifically, in the case of the battery pack according to the present invention, the battery module may be arranged in a matrix form having a plurality of rows R1 to R6 and a plurality of columns C1 to C2, and a barrier 120 may be provided between adjacent pairs of columns C1 and C2, and the blocking portion 320 may cover the end portions of the battery modules facing each other and the barrier 120 together. The rows R1 to R6 constituting the matrix may be represented in other words as a layer. The plurality of rows or layers are separated through the cross member 140, and the plurality of columns are separated through the barrier 120. Therefore, since the battery modules are separated from the cross member 140 through the barrier 120, fire of the battery module itself may be prevented from spreading to an adjacent battery module. The end plates 400 of battery modules B and B' facing in each column may be disposed to face each other, and the terminals 10 (or the terminal busbars 1320) of the battery modules B and B' facing in each column may be disposed to face each other.

However, a predetermined interval may be formed between the upper ends of the cross members 140 and the barriers 120, and the pack lid 300 for assembling the pack lid 300 and electrical connection between the battery modules B. Since the busbars 30, 50 and the like may pass between the upper ends of the cross members 140 and the barriers 120, and the pack lid 300, and the upper end of the battery module does not constitute a perfect plane, a predetermined partial distance may exist between the upper ends of the cross members 140 and the barriers 120, and the pack lid 300. Therefore, in the present disclosure, a gap is eliminated only in a necessary portion through the blocking portion 320, thereby preventing a fire from propagating due to a short and outflow of a flame.

Meanwhile, as shown in FIG 7, the end portions of the battery modules included in the same column are connected in series through a first busbar 30. The first busbar 30 may be an inter busbar that electrically connects the terminals 10 of the battery modules (the terminal busbars 1320). That is, the battery modules B11 to B16 and B26 to B21 are connected in series in the longitudinal direction through the first busbar 30. The last battery modules B16 and B26 included in the adjacent columns face each other and are connected in series in the width direction through a second busbar 50. The second busbar 50 may be an inter busbar that electrically connects the terminals 10 of the battery modules (the terminal busbars 1320). Accordingly, all of the battery modules installed in the battery pack form one series connection to form a high voltage. In this electrical connection state, when shorts occur due to arcing of battery modules facing each other, instantaneous sparks and flames are strongly generated.

Therefore, the blocking portion 320 is formed to be continuously formed along the longitudinal direction at the center of the pack lid 300 as shown in FIG 1, so that the end portions 10, the terminals 10, the barrier 120, the first busbar 30, and the second busbar 50 of the battery modules B facing each other can be covered together at a time by the blocking portion 320, thereby primarily blocking arcing at various points where all arcing may occur. In addition, even if the specification of the battery pack is changed and the number of battery modules disposed in the battery pack is changed, the same fact of sharing the components is obtained by using the same pack lid 300.

In the case of the battery pack according to the present disclosure, the terminal 10 or the busbar 30 or 50 may be provided in the battery module B, and the blocking portion 320 may protrude toward the battery module B to cover the terminal 10 or the busbar 30 or 50 of the battery module. It is therefore to prevent a short between adjacent other busbars or terminals 10,10'. The terminals 10 and 10' may be terminal busbars 1320. The plurality of battery modules B may be disposed to face in the width direction of the pack case, and the blocking portion 320 may protrude to cover the facing end portions of the battery modules B together. The battery modules B facing each other should be electrically insulated with the barrier 120 therebetween. Therefore, by pressing them together with the blocking portion 320 and preventing a gap between the pack lid 300 and the upper end of the battery module B from being generated, a short between the busbars or terminals spaced apart as shown in the state of FIG 6 is prevented. When the short is prevented as described above, the battery module may be finished with only a fire generated by the fire, and an additional fire may be prevented from propagating to the outside.

Specifically, as shown in FIG 6, in the case of the battery pack according to the present disclosure, the terminal 10 or the busbars 30 and 50 may be provided at opposing ends of the battery modules B, the terminal 10 or the busbars 30 and 50 may be protected by the busbar covers 500 and 700 formed of a material having refractory properties, and the blocking portion 320 may cover the busbar covers 500 and 700 of the battery modules B facing together.

The first busbar cover 500 has a bent shape at right angles and directly covers the busbars 30 and 50 or the terminals 10 of the battery modules. In addition, the second busbar cover 700 may cover an upper ends of the first busbar covers 500 facing each other in a panel shape.

The second busbar cover 700 may cover the terminals 10 of the two battery modules B and B' facing each other. Alternatively, the second busbar cover 700 may cover the terminals 10 and the busbars 30 of the adjacent four battery modules B and B'. The busbar 30 may connect terminals 10 of two adjacent battery modules B and B'.

Through this, primarily, insulating between the terminals 10 or the busbars 30 and 50 spaced apart from each other through the busbar covers 500 and 700 is ensured. In the case of the busbar covers 500 and 700, since the busbar covers 500 and 700 need to be refractory and have a light weight and have good moldability, the busbar covers 500 and 700 may be formed by sintering a material such as mica.

Meanwhile, since the second busbar 50 connecting the last battery modules B16 and B26 in the adjacent column is electrically connected from its original point and is not in an insulating necessary relationship, the second busbar cover 700 may not be installed at the corresponding point. Therefore, at the corresponding point, the blocking portion 320 may also be omitted as necessary. The blocking portion 320 may protrude toward the busbar covers 500 and 700 and may be disposed such that a lower surface of the blocking portion 320 contacts the upper surface of the busbar covers 500 and 700 or the upper surface of the second busbar cover 700, thereby eliminating a space between the blocking portion 320 and the busbar covers 500 and 700 and blocking or sealing between the blocking portion 320 and the busbar covers 500 and 700.

Meanwhile, when a gas or a flame occurs, damage to the busbar covers 500 and 700 may occur, and accordingly, the blocking portion 320 of the pack lid 300 may secondarily press the busbar covers 500 and 700 downward, thereby eliminating the gap between the busbar covers 500 and 700 and the pack lid 300, and physically blocking the gas or the flame to prevent the gas or the flame from passing to the opposite side of the barrier 120. Therefore, the short circuit between the terminals 10 and the busbars 30 and 50 is fundamentally blocked by the blocking portion 320, and the pack lid 300 also seals the battery pack without damage in a fire situation and prevents flame outflow to the outside.

In particular, in the case of the battery pack according to the present disclosure, a barrier 120 disposed between the battery modules B facing each other is provided in the case body 100, and the blocking portion 320 protrudes toward the upper end of the barrier 120, thereby blocking flame or gas propagation from the upper side of the barrier 120. The barrier 120 is disposed between the battery modules B facing each other, and the barrier 120 has a distance from the packing lid 300, and thus blocking the barrier 120 by the blocking portion 320 blocks all the paths through which the flames may propagate between the adjacent battery rows C1 and C2.

The blocking portion 320 may form a part of the pack lid 300. The blocking portion 320 may be positioned above the space between the battery modules B and B' facing each other in the pack lid 300. The blocking portion 320 may be integrally formed in the pack lid 300.

Meanwhile, as shown in FIG 6, the blocking portion 320 may include a contact portion 322 that is in surface contact with the busbar covers 500 and 700 in a planar shape, and a connecting portion 324 that extends inclinedly from both ends of the contact portion 322 to the opposite side of the busbar covers 500 and 700 and supports the contact portion 322. The blocking portion 320 is integrally molded in a form in which a part of the plate-shaped pack lid 300 is recessed. The shape of the blocking portion 320 basically has a downwardly recessed plane. This is defined as the contact portion 322. Since the contact portion 322 has a planar shape, the contact portion 322 makes a surface contact with the busbar covers 500 and 700, and thus insulating the busbars is reliably realized through a contact area between the two. Further, the contact portion 322 has a shape connected to the original pack lid 300 through the connection portion 324. The connecting portion 324 is formed as an inclined surface and serves to provide elasticity so as to have a constant pressing force while the contact portion 322 contacts the busbar covers 500 and 700. By adjusting the inclination or length of the connection portion 324, the contact portion 322 presses the busbar covers 500 and 700 with preload during assembly, and a coupling force between the pack lid 300, the busbar covers 500 and 700, the busbars 30 and 50, and the terminal 10 is ensured. In addition, since the blocking portion 320 is formed of an elastic material, it is possible to prevent excessive pressure from being applied to the side of the busbar cover 500 and 700. The connection portion 324 may have a shape bent downward in the pack lid 300, and a contact portion 322 may be disposed between both connection portions 324. The connection portion 324 may be formed not only in a straight line but also in a curved shape.

FIG. 9 is a cross-sectional view of a battery pack according to another embodiment of the present invention. In this case, a protrusion 323 spaced apart from each other is formed in the blocking portion 320, and the busbar covers 500 and 700 may be seated between the protrusions 323 so that the blocking portion 320 and the busbar covers 500 and 700 may be in contact with each other. That is, the protrusion 323 may be formed at a point between the contact part 322 and the connection part 324 by forming the protrusion 323 downward by adjusting the shape of the mold and the thickness of the material during the plate pressing process of the pack lid 300. In addition, the protrusion 323 may have a separate shape and may be attached to or fastened to the pack lid 300.

The protrusion 323 is spaced apart from each other to form a pair of bus bar covers 500 and 700, and the busbar covers 500 and 700 are disposed between the pair of protrusions 323 so that the coupling between the blocking portion 320 and the busbar covers 500 and 700 or the pack lid 300 and the busbar covers 500 and 700 is increased, and the positions of the blocking portion 320 and the busbar covers 500 and 700 and the busbar covers 500 and 700 may not be deviated by vehicle vibration or misassembly. Since the contact part 322 of the blocking portion 320 and the busbar covers 500 and 700 are in surface contact with each other at the precise position through the protrusion 323, consistency of performance according to products may be ensured and mechanical connection may be implemented without a separate adhesive.

The pack lid and the battery pack according to the present disclosure may be applied to a battery system of various vehicles such as an internal combustion engine vehicle, an electric vehicle, a hybrid vehicle, a fuel cell vehicle, and the like, and may be applied to a battery system of various fields such as an industrial energy storage system (ESS), a home ESS, and a small battery pack in addition to the vehicle.

Although the present invention has been shown and described in relation to specific embodiments of the present invention, it will be apparent to those skilled in the art that the present invention may be variously modified and changed without departing from the technical spirit of the present invention provided by the appended claims.

### [INDUSTRIAL APPLICABILITY]

The present disclosure can provide a battery pack and pack lid that prevents fire from spreading to an opposite module when a fire occurs in a specific battery module and prevents an electrical short circuit, thereby preventing flames from leaking to the outside.

## Claims

1. A battery pack comprising:
a pack case;
a plurality of battery modules in the pack case facing each other; and
a blocking portion protruding from one surface of the pack case toward an inner space of the pack case and formed at a point between the battery modules facing each other to block a propagation of a flame or gas between the battery modules facing each other.

2. The battery pack of claim 1, wherein the blocking portion protrudes downward from an upper surface of the pack case or protrudes upward from a lower surface of the pack case.

3. The battery pack of claim 1, wherein a terminal or a busbar is provided in the battery module, and the blocking portion protrudes toward the battery module to cover the terminal or the busbar of the battery module.

4. The battery pack of claim 1, wherein a plurality of the battery modules are disposed to face in a width direction of the pack case, and the blocking portion protrudes to cover end portions of the battery modules facing each other together.

5. The battery pack of claim 1, wherein the battery modules facing in the width direction of the pack case constitute one layer, a plurality of layers are arranged in a longitudinal direction of the pack case, and the blocking portion extends in the longitudinal direction of the pack case to cover the battery modules included in the plurality of layers.

6. The battery pack of claim 1, wherein the pack case includes a case body having one surface opened thereto and a pack lid closing the case body, and the blocking portion is formed so that a portion of the pack lid is recessed inside the pack case.

7. The battery pack of claim 1, wherein a barrier disposed between the battery modules facing each other is provided in the case body, and the blocking portion protrudes toward an end of the barrier to block a propagation of a flame or gas at an end of the barrier.

8. The battery pack of claim 1, wherein a terminal or a busbar is provided at a facing end portion of the battery modules, and the blocking portion covers a terminal or a busbar of the battery modules facing each other.

9. The battery pack of claim 1, wherein a terminal or a busbar is provided at a facing end portion of the battery modules, the terminal or the busbar is protected by a busbar cover, and the blocking portion covers the busbar cover.

10. The battery pack of claim 9, wherein the blocking portion blocks a propagation of a flame or gas between the battery modules facing each other by contacting the busbar cover of the battery modules facing each other.

11. The battery pack of claim 9, wherein a protrusion spaced apart from each other is formed in the blocking portion, and the busbar cover is seated between the protrusions to maintain an assembly position of the blocking portion and the busbar cover.

12. The battery pack of claim 11, wherein the blocking portion includes a contact portion having a planar shape and surface contact with the busbar cover, and a connecting portion extending inclined from both ends of the contact portion to a side opposite the busbar cover and supporting the contact portion.

13. The battery pack of claim 1, wherein the battery modules are disposed in a matrix shape having a plurality of rows and columns, and a barrier is provided between adjacent columns of the battery modules, and the blocking portion covers an end portion of the battery modules facing each other and the barrier together.

14. The battery pack according to claim 13, wherein the end portions of the battery modules included in the same column are connected in series through a first busbar, the last battery modules included in the adjacent columns face each other and are connected in series through a second busbar, and the blocking portion covers the end portions of the battery modules facing each other, the barrier, the first busbar, and the second busbar.

15. The battery pack according to claim 1, wherein the blocking portion is made of the same material as the pack case and is formed together when the pack case is molded.

16. A pack lid comprising a blocking portion which protrudes toward the inner space of a case body at a point between the battery modules facing each other, thereby blocking a propagation of a flame or gas between the battery modules facing each other,
wherein the pack lid closes the case body having one side opened.

17. A vehicle comprising the battery pack of claim 1.
